# EUROPÄISCHE PATENTANMELDUNG

(11) **EP 2 320 075 A2**
(43) Veröffentlichungstag der Anmeldung: **11.05.2011**
(21) Anmeldenummer: 10190333.4
(22) Anmeldetag: 08.11.2010
(51) Int. Cl.: F03D 1/06, F03D 11/00

(54) **Blattspitze für ein Rotorblatt einer Windenergieanlage und Verfahren zur Montage der Blattspitze an ein Rotorblatt**

(30) Priorität: 10.11.2009 DE 102009046586
(71) Anmelder: NORDEX Energy GmbH, 22848 Norderstedt (DE)
(72) Erfinder: Lübbe, Lutz, 18182, Bentwisch (DE)
(74) Vertreter: Garrels, Sabine

(57) **Zusammenfassung**

Die Erfindung betrifft eine Blattspitze (24) für ein Rotorblatt (22) einer Windenergieanlage und ein Verfahren zur Montage der Blattspitze (24) an ein Rotorblatt (22).
Aufgabe der Erfindung ist es, eine Blattspitze (24) für ein Rotorblatt (22) einer Windenergieanlage (20) zur Verfügung zu stellen, die den Einbau und den Austausch der Blattspitze vereinfacht, sowie ein Verfahren zur Montage einer derartigen Blattspitze.
Die Aufgabe wird gelöst durch eine Blattspitze (24) für ein Rotorblatt (22) einer Windenergieanlage (20). Eine wesentliche Neuerung ist, dass sich die Blattspitze mittels eines verstellbaren Klemmkeils (6) einsetzen lässt. Bei auftretenden Beschädigungen ist so die Blattspitze einfach auswechselbar.
Das erfindungsgemäße Verfahren zur Montage der Blattspitze außerhalb der Schalenform hat den besonderen Vorteil, dass keine Beschädigung der Schalenform durch das Sägen erfolgt.

## Beschreibung

### Beschreibung

Die Erfindung betrifft eine Blattspitze für ein Rotorblatt einer Windenergieanlage und ein Verfahren zur Montage der Blattspitze an ein Rotorblatt.

### Stand der Technik

Rotorblätter für Windenergieanlagen bestehen in der Vielzahl aus glasfaserverstärktem Kunststoff und werden üblicherweise in Halbschalen hergestellt. Die Rotorblätter sind mit einem Blitzschutzsystem ausgerüstet, welches aus mehreren Rezeptoren und einem Kabelsystem besteht. Der Hauptrezeptor wird durch die aus Aluminium geformte Blattspitze gebildet. Der einschlagende Blitz wird von den Rezeptoren über das sich im Inneren des Rotorblattes befindende Kabel zur Erdung weiterleitet. In der Regel wird die als separates Bauteil hergestellte Blattspitze beim Zusammenfügen des Rotorblattes integriert. Der Stand der Technik offenbart aber auch nachrüstbare Blattspitzen.

So wird in DE 102005051537 A1 ein Verfahren zur nachträglichen Einrichtung eines Blitzschutzsystems in wenigstens einem Rotorblatt einer bestehenden Windkraftanlage offenbart. Hierzu wird die Spitze des Rotorblattes entlang einer vorgegebenen Trennlinie entfernt. Eine an die Form des Rotorblattes angepasste Austauschspitze aus einem elektrisch leitfähigen Material wird an der Trennlinie angesetzt und befestigt. Anschließend wird eine elektrische Leitung mit der Erdung verbunden.

In WO 2005031158 A2 wird eine Blitzschutzeinrichtung offenbart, die aus einer Blattspitze mit mindestens einem Abschnitt aus einem kompakten Metall besteht. Die Blattspitze hat drei bis sechs Verbindungsstangen, welche in Öffnungen in den Rotorblattgrundkörper eingreifen und dort verklebt werden. Unabhängig davon, dass die Blattspitze teilweise aus Metall besteht und dadurch ein hohes Gewicht ausweist, ist auch hier bei der Montage hohe Präzision erforderlich.

### Beschreibung der Erfindung

Davon ausgehend ist es Aufgabe der Erfindung, eine Blattspitze für ein Rotorblatt einer Windenergieanlage zur Verfügung zu stellen, die den Einbau und den Austausch der Blattspitze vereinfacht, sowie ein Verfahren zur Montage einer derartigen Blattspitze.

Die Aufgabe wird gelöst durch eine Blattspitze für ein Rotorblatt einer Windenergieanlage mit den Merkmalen des Anspruchs 1. Vorteilhafte Ausgestaltungen sind in den sich anschließenden Unteransprüchen angegeben.

Eine Grundidee ist, dass sich die Blattspitze mittels eines verstellbaren Klemmkeils einsetzen lässt. Bei auftretenden Beschädigungen ist so die Blattspitze einfach auswechselbar. Die Blattspitze kann in allen Rotorblättern eingesetzt werden.

Die erfindungsgemäße Blattspitze weist einen zum Rotorblatt passgenauen Grundkörper, ein mit dem Grundkörper verbundenes Verbindungsstück sowie einen Klemmkeil auf. Der Grundkörper und das Verbindungsstück sind bevorzugt einteilig ausgebildet. Das Verbindungsstück kann aber auch in den Grundkörper eingefügt oder an diesen angefügt sein. Der Klemmkeil ist mit einer abgeflachten Seite des Verbindungsstücks formschlüssig verbunden.

Das Verbindungsstück ist in seinen Abmessungen den inneren Abmessungen des Rotorblattes angepasst.

In einer Ausführungsform weist das Verbindungsstück eine einseitige Führung auf, die eine nach außen hin keilförmige Gestalt haben kann. Die einseitige Führung nimmt etwa ein Drittel der Breite des Verbindungsstücks ein und ragt etwa zwei Drittel weiter in das Rotorblatt hinein als das übrige Verbindungsstück.

Der Klemmkeil ist auf der abgeflachten Seite des Verbindungsstücks beweglich gelagert. Die formschlüssige Verbindung ist bevorzugt eine Schwalbenschwanzverbindung. Es sind aber auch andere formschlüssige Verbindungen, die eine translatorische Bewegung des Klemmkeils ermöglichen, denkbar.

In den Klemmkeil und die Führung sind Bohrungen eingefügt, die in einer Flucht liegen und in welche ein Gewindebolzen eingeführt werden kann. Auf dem Gewindebolzen ist eine Scheibe angeordnet, die mit Hilfe eines Kerbstiftes gesichert werden kann.

Die oben genannte Aufgabe wird ebenfalls gelöst durch das Verfahren nach Anspruch 10. Vorteilhafte Ausgestaltungen des Verfahrens sind in den sich anschließenden Unteransprüchen angegeben.

Das erfindungsgemäße Verfahren dient zur Montage der Blattspitze in ein Rotorblatt einer Windenergieanlage. Es ist durch folgende Schritte gekennzeichnet:
- Durchführen eines Gewindebolzens durch einen Klemmkeil,
- Aufschieben einer Scheibe auf den Gewindebolzen, wobei die Scheibe mittels eines Kerbstiftes in einer vorbestimmten Position gesichert wird,
- Aufschieben des Klemmkeils auf eine abgeflachte Seite eines Verbindungsstücks,
- Verbinden des Klemmkeils mit einer einseitigen Führung durch Eindrehen des Gewindebolzens in die einseitige Führung,
- Einsetzen der Blattspitze in das Rotorblatt,
- Verspannen der Blattspitze im Rotorblatt durch Herausdrehen des Gewindebolzens aus der einseitigen Führung.

Erfindungsgemäß wird vor dem Einsetzen der Blattspitze in das Rotorblatt ein Blitzschutzkabel an eine dafür vorgesehene Gewindebuchse angeschlossen.

In einer Ausgestaltung kann die Blattspitze eingeklebt werden. Dabei erfolgt das Verspannen der Blattspitze im Rotorblatt bevor der Kleber ausgehärtet ist. Zum Einsetzen der Blattspitze können Schablonen verwendet werden.

Durch das erfindungsgemäße Verfahren kann die Montage der Blattspitze außerhalb der Schalenform erfolgen, so dass keine Beschädigungen der Schalenform durch das Sägen des Rotorblattes in der Form hervorgerufen werden.

Die erfindungsgemäße Blattspitze kann direkt bei der Herstellung der Rotorblätter oder nachträglich eingefügt werden. Sie ist so konstruiert, dass man sie nach dem Entformen in den Rohflügel bzw. nach dem Lackieren in das Rotorblatt einsetzen kann. Dazu muss beim Verkleben des Rotorblattes der Bereich der Blattspitze freigelassen werden. Eine gegebenenfalls erforderliche Verklebung der neuen Blattspitze kann definiert erfolgen. Die erfindungsgemäße Blattspitze ist leicht auswechselbar. Sie ist geeignet, nachträglich in ein Rotorblatt eingesetzt zu werden, z.B. im Zusammenhang mit Reparaturarbeiten an durch Blitzschlag geschädigten Blattspitzen oder zur Nachrüstung an Rotorblättern von Windenergieanlagen ohne Blitzschutzsystem.

### Beispiele

Die Erfindung wird anhand von Zeichnungen näher erläutert. Dazu zeigt
- Figur 1: eine schematische Darstellung einer Windenergieanlage,
- Figur 2: einen Querschnitt durch die erfindungsgemäße Blattspitze,
- Figur 3: einen Schnitt A-A durch die Blattspitze aus Fig. 2,
- Figur 4: den Gewindebolzen und
- Figur 5: einen Querschnitt durch die in ein Rotorblatt montierte Blattspitze.

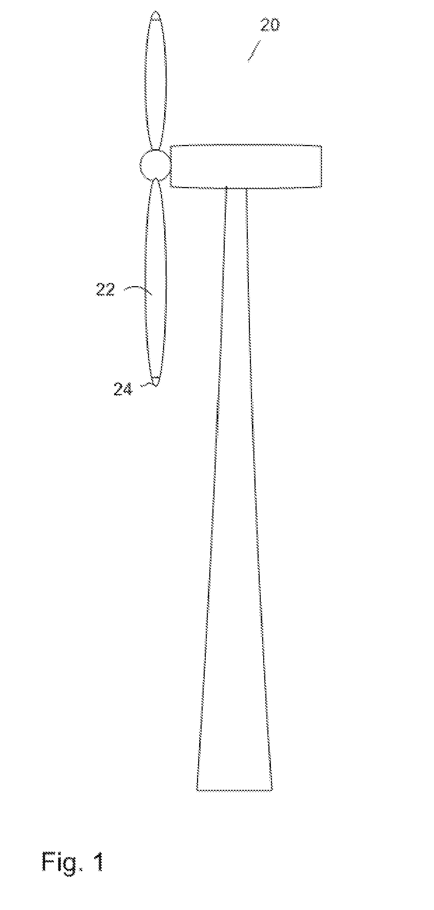

Figur 1 zeigt eine Windenergieanlage 20 deren Rotorblätter 22 separate Blattspitzen 24 besitzen.

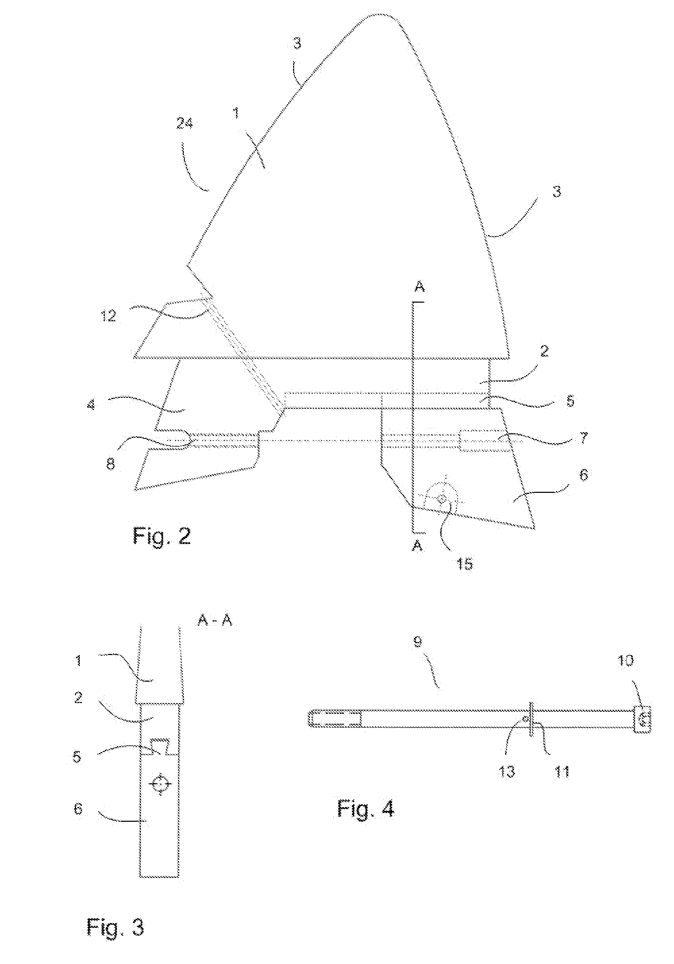

Die erfindungsgemäße Blattspitze 24 wird in Figur 2 gezeigt. Sie besteht aus einem Grundkörper 1, welcher passgenau zum Rotorblatt gefertigt ist. Der Grundkörper 1 ist mit einem Verbindungsstück 2 verbunden. Das Verbindungsstück 2 ist von den Randbereichen 3 beabstandet und mit dem Grundkörper 1 einteilig ausgebildet. Das Verbindungsstück 2 ist in seinen Abmessungen den inneren Abmessungen einer Aufnahme im Rotorblatt angepasst, so dass die Blattspitze 24 in das Rotorblatt eingefügt werden kann. Es ist in seiner Tiefe vorzugsweise flach und besitzt einseitig eine nach außen hin keilförmige Führung 4. Die keilförmige Führung 4 nimmt ca. ein Drittel der Verbindungsstückbreite ein und ragt etwa zwei Drittel länger in das Rotorblatt hinein als das übrige Verbindungsstück 2. An der abgeflachten Seite des Verbindungsstücks 2 ist eine schwalbenschwanzförmige Nut 5 eingearbeitet. Figur 3 zeigt die Anordnung im Schnitt A-A. In die Nut 5 wird ein zur äußeren Seite hin einseitig keilförmiger Klemmkeil 6 eingefügt, welcher somit in der Nut 5 verschiebbar und verdrehsicher gelagert ist. Prinzipiell können auch andere Verbindungen genutzt werden, die es ermöglichen, dass der Klemmkeil 6 in Richtung Führung 4 verschoben werden kann. Der Klemmkeil 6 ist in seiner Breite und Tiefe entsprechend der keilförmigen Führung 4 ausgelegt. Die Länge des Klemmkeils 6 kann der Länge der keilförmigen Führung 4 entsprechen oder größer sein. In den Klemmkeil 6 und in die Führung 4 sind Bohrungen 7 und 8 eingefügt, die in einer Flucht liegen. Die in der keilförmigen Führung 4 befindliche Bohrung 8 ist mit einem Gewinde ausgestattet. Der in Figur 4 dargestellte Gewindebolzen 9 wird durch die Bohrung 7 im Klemmkeil 6 hindurchgeführt, so dass sich der Kopf 10 des Gewindebolzens vollständig in der Bohrung 7 des Klemmkeils 6 befindet. Der Kopf 10 ist mit einer Aufnahme für ein Werkzeug versehen, beispielsweise einem Innensechskant. Auf den Bolzen 9 wird unmittelbar hinter dem Klemmkeil 6 eine Scheibe 11 gesetzt, die beispielsweise mit einem Kerbstift versplintet wird. Das Einfügen des Bolzens 9 kann in der Vormontage erfolgen. Der Klemmkeil 6 mit eingefügtem Bolzen 9 wird in die Nut 5 geschoben und der Bolzen 9 in die mit einem Innengewinde versehene Bohrung 8 der einseitigen Führung 4 eingeschraubt. Dabei bewegt sich der Klemmkeil 6 auf die Führung 4 zu. Der Klemmkeil 6 wird soweit in Richtung der Führung 4 geschoben, bis ein Einsetzen der Blattspitze in das Rotorblatt möglich ist. Anschließend wird das Blitzschutzkabel 14 an der dafür vorgesehenen Gewindebuchse 15 befestigt und die Blattspitze 24 in das Rotorblatt eingefügt.

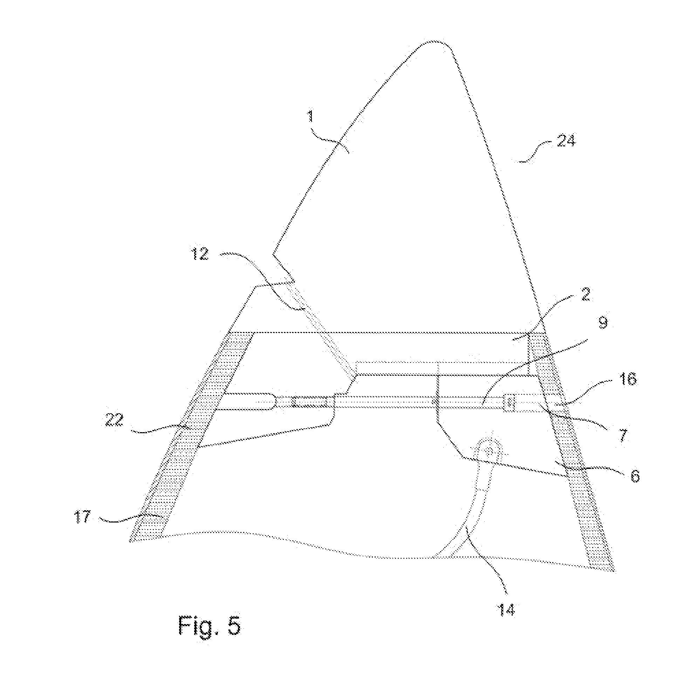

Figur 5 zeigt eine in ein Rotorblatt 22 eingesetzte Blattspitze 24 mit angeschlossenem Blitzschutzkabel 14. Die Bohrung 7 im Klemmkeil 6 korrespondiert mit einer im Rotorblatt befindlichen Bohrung 16. Durch diese Bohrung 16 kann ein nicht dargestelltes Werkzeug eingeführt werden. Durch Herausdrehen des Bolzens 9 mit Hilfe des Werkzeuges bewegt sich der Klemmkeil 6 nach außen und verspannt die Blattspitze 24 im Rotorblatt. Die Blattspitze 24 wurde mittels einer nicht dargestellten Konturschablone eingesetzt und vor dem Aushärten des Klebers 17 im Rotorblatt 22 verspannt. Nach dem Einsetzen der Blattspitze 24 wird die Bohrung 16 verschlossen und die Entwässerungsbohrung 12, welche sich über den Grundkörper 1 bis in das Verbindungsstück 2 erstreckt, freigemacht.

### Bezugszeichenliste

- 1: Grundkörper
- 2: Verbindungsstück
- 3: Randbereiche des Grundkörpers
- 4: einseitige keilförmige Führung
- 5: schwalbenschwanzförmige Nut
- 6: Klemmkeil
- 7: Bohrung im Klemmkeil 6
- 8: Bohrung in der Führung 4
- 9: Gewindebolzen
- 10: Kopf des Gewindebolzens
- 11: Scheibe
- 12: Entwässerungsbohrung
- 13: Kerbstift
- 14: Blitzschutzkabel
- 15: Gewindebuchse
- 16: Bohrung
- 17: Kleber
- 20: Windenergieanlage
- 22: Rotorblatt
- 24: Blattspitze

## Patentansprüche

1. Blattspitze (24) für ein Rotorblatt (22) einer Windenergieanlage (20), welche einen zum Rotorblatt (22) passgenauen Grundkörper (1), ein mit dem Grundkörper (1) verbundenes Verbindungsstück (2) sowie einen Klemmkeil (6) aufweist, wobei der Klemmkeil (6) mit einer abgeflachten Seite des Verbindungsstücks (2) formschlüssig verbunden ist.

2. Blattspitze (24) nach Anspruch 1, **dadurch gekennzeichnet, dass** das Verbindungsstück (2) in seinen Abmessungen den inneren Abmessungen des Rotorblattes angepasst ist.

3. Blattspitze (24) nach Anspruch 1 oder 2, **dadurch gekennzeichnet, dass** das Verbindungsstück (2) eine einseitige Führung (4) aufweist.

4. Blattspitze (24) nach Anspruch 3, **dadurch gekennzeichnet, dass** die einseitige Führung (4) eine nach außen hin keilförmige Gestalt aufweist.

5. Blattspitze (24) nach Anspruch 3 oder 4, **dadurch gekennzeichnet, dass** die einseitige Führung (4) etwa ein Drittel der Breite des Verbindungsstücks einnimmt und etwa zwei Drittel weiter in das Rotorblatt (22) hineinragt als das übrige Verbindungsstück (2).

6. Blattspitze (24) nach einem der Ansprüche 1 bis 5, **dadurch gekennzeichnet, dass**
der Klemmkeil (6) auf der abgeflachten Seite des Verbindungsstücks (2) beweglich gelagert ist.

7. Blattspitze (24) nach einem der Ansprüche 1 bis 6, **dadurch gekennzeichnet, dass**
die formschlüssige Verbindung eine Schwalbenschwanzverbindung (5) ist.

8. Blattspitze (24) nach einem der Ansprüche 1 bis 7, **dadurch gekennzeichnet, dass**
in den Klemmkeil (6) und die Führung (4) Bohrungen (7) und (8) eingefügt sind,
die in einer Flucht liegen und die zur Aufnahme eines Gewindebolzens (9) vorgesehen sind.

9. Blattspitze (24) nach Anspruch 8, **dadurch gekennzeichnet, dass** auf dem Gewindebolzen (9) eine Scheibe (11) angeordnet ist, die mit Hilfe eines Kerbstiftes (13) gesichert wird.

10. Verfahren zur Montage einer Blattspitze (24) an ein Rotorblatt (22) einer Windenergieanlage (20), **gekennzeichnet durch** folgende Schritte:
- Durchführen eines Gewindebolzens (9) **durch** einen Klemmkeil (6),
- Aufschieben einer Scheibe (11) auf den Gewindebolzen (9), wobei die Scheibe (11) mittels eines Kerbstiftes (13) in einer vorbestimmten Position gesichert wird,
- Aufschieben des Klemmkeils (6) auf eine abgeflachte Seite eines Verbindungsstücks (2),
- Verbinden des Klemmkeils (6) mit einer einseitigen Führung (4) **durch** Eindrehen des Gewindebolzens (9) in die einseitige Führung (4),
- Einsetzen der Blattspitze (24) in das Rotorblatt (22),
- Verspannen der Blattspitze (24) im Rotorblatt (22) **durch** Herausdrehen des Gewindebolzens (9) aus der einseitigen Führung (4).

11. Verfahren nach Anspruch 10, **dadurch gekennzeichnet, dass** vor dem Einsetzen der Blattspitze (24) in das Rotorblatt (22) ein Blitzschutzkabel (14) angeschlossen wird.

12. Verfahren nach den Ansprüchen 10 oder 11, **dadurch gekennzeichnet, dass** die Blattspitze (24) in das Rotorblatt (22) eingeklebt wird.

13. Verfahren nach einem der Ansprüche 10 bis 12, **dadurch gekennzeichnet, dass** zum Einsetzen der Blattspitze (24) Schablonen verwendet werden.
